# EUROPEAN PATENT APPLICATION

(11) **EP 2 372 718 A2**
(43) Date of publication of application: **05.10.2011**
(21) Application number: 11159917.1
(22) Date of filing: 25.03.2011
(51) Int. Cl.: G21C 17/06, G21C 19/02

(54) **Systems and methods for servicing a fuel assembly in a light water reactor**

(30) Priority: 31.03.2010 US 751314
(71) Applicant: Global Nuclear Fuel-Americas, LLC, Wilmington, North Carolina 28401 (US)
(72) Inventor: Diller, Peter Ray, Wilmington, NC 28403 (US); Smith, David Grey, Wilmington, NC 28403 (US); Kiernan, Michael T., Wilmington, NC 28403 (US); Luciano, Gerald A., Wilmington, NC 28403 (US); Kelemen, Colin F., Wilmington, NC 28403 (US)
(74) Representative: Gray, Thomas

(57) **Abstract**

Systems and methods for servicing a fuel assembly in a light water reactor (10) include those for controlling flow through a fuel assembly (14) to maintain debris (102) in the fuel assembly (14) during removal and transportation of the fuel assembly (14), those for discharging debris (102) from the fuel assembly (14), and those for isolating and sampling the water chemistry of a fuel assembly (14. An exemplary system includes a closure device (54) configured to seal a mast (16) to a fuel assembly (14) to surround the upper opening of the fuel assembly (14) and provide a flow control channel between a void (49) in the mast (16) and a lower opening in a lower tie plate (34).

## Description

### TECHNICAL FIELD

The technical field is generally light water reactors and, more specifically, systems and methods for controlling debris within a light water reactor's nuclear fuel assembly and for sampling a fuel assembly.

### BACKGROUND

One problem found in light water reactors is that debris within a fuel assembly has the potential to damage or perforate fuel rods. During normal operation of a light water reactor, water flows through fuel assemblies of a reactor core and debris is filtered from the flow and trapped within the lower tie plate. However, debris can get into fuel assemblies as a fuel assembly is moved within the reactor core several times throughout its design life by fuel handling systems. The debris that has collected within the lower tie plate can become dislodged during movement due to a reverse coolant flow and/or vibration and fall into the top end of fuel assemblies that are positioned in the core below the assembly being moved.

Another problem found in light water reactors is that it is difficult to efficiently identify a damaged fuel assembly. Fuel assemblies are sampled for gas leaking from perforated fuel rods, such as by in-mast sipping, when it is evident by plant water chemistry that fuel damage has occurred. Two common methods are generally utilized to search for damaged fuel rods in a plurality of fuel assemblies. The first method employs mast sipping of each fuel assembly during fuel movements. This method is vulnerable to false positives due to the sensing of damaged fuel of adjacent fuel assemblies that may be leaking a gas. The second method deploys a device that requires the movement of the fuel assembly from the core to a separate chamber. This movement is a time consuming process that affects the overall availability of the reactor unit.

### SUMMARY

The various embodiments described herein provide systems and methods for servicing a fuel assembly in a light water reactor including exemplary systems and methods for controlling debris within a fuel assembly and exemplary systems and methods for sampling a fuel assembly. Exemplary systems and methods described herein control flow to maintain debris within the fuel assembly during removal and transportation of the fuel assembly and to discharge debris from the fuel assembly.

According to an exemplary embodiment, a system for servicing a fuel assembly in a light water reactor includes a mast with a void and a closure device. The fuel assembly includes a lower opening in a lower tie plate and an upper opening through which there is access to a volume that includes fuel rods of the fuel assembly. The closure device is configured to seal the mast to the fuel assembly to surround the at least one upper opening of the fuel assembly and provide a flow control channel between the mast void and the lower opening of the fuel assembly. Where the fuel assembly is a channeled fuel, the closure device seals to a fuel assembly channel to provide the flow control channel. Where the fuel assembly is non-channeled fuel, the closure device seals to the lower tie plate to provide the flow control channel.

According to an exemplary embodiment, a method of removing debris from a reactor core includes sealing a mast to a fuel assembly to surround each upper opening of the fuel assembly and provide a flow control channel between a void in the mast and a lower opening in a lower tie plate of the fuel assembly and controlling flow through the lower opening to maintain debris within the lower tie plate.

According to another exemplary embodiment, a method of sampling a fuel assembly in a reactor includes sealing a mast to a fuel assembly to surround each upper opening of the fuel assembly and provide a flow control channel between a void in the mast and a lower opening in a lower tie plate of the fuel assembly and sampling the water chemistry both inside and outside of the flow control channel.

The foregoing has broadly outlined some of the aspects and features of the various embodiments, which should be construed to be merely illustrative of various potential applications. Other beneficial results can be obtained by applying the disclosed information in a different manner or by combining various aspects of the disclosed embodiments. Other aspects and a more comprehensive understanding may be obtained by referring to the detailed description of the exemplary embodiments taken in conjunction with the accompanying drawings, in addition to the scope defined by the claims.

### DESCRIPTION OF THE DRAWINGS

Fig. 1 is a partial elevation view of a light water reactor that illustrates removal of a fuel assembly from a reactor core and transportation of the fuel assembly to a debris collection station using a mast, according to an exemplary embodiment.
Fig. 2 is a partial perspective view of the fuel assembly of Fig. 1.
Fig. 3 is a perspective view of a lower tie plate and debris filter of the fuel assembly of Fig. 2.
Fig. 4 is a cross sectional view of the lower tie plate of Fig. 3, showing trapped debris within the lower tie plate.
Fig. 5 is a partial perspective view of a closure device of the mast of Fig. 1.
Fig. 6 is a partial elevation view of the closure device Fig. 5.
Fig. 7 is a flow diagram of an exemplary method of sampling a fuel assembly, both inside and outside of the flow control channel, while controlling the debris in a fuel assembly.
Fig. 8 is a partial perspective view of a mast with an alternative closure device, according to an exemplary embodiment.

### DETAILED DESCRIPTION

As required, detailed embodiments are disclosed herein. It must be understood that the disclosed embodiments are merely exemplary of various and alternative forms. As used herein, the word "exemplary" is used expansively to refer to embodiments that serve as illustrations, specimens, models, or patterns. The figures are not necessarily to scale and some features may be exaggerated or minimized to show details of particular components. In other instances, well-known components, systems, materials, or methods that are know to those having ordinary skill in the art have not been described in detail in order to avoid obscuring the present disclosure. Therefore, specific structural and functional details disclosed herein are not to be interpreted as limiting, but merely as a basis for the claims and as a representative basis for teaching one skilled in the art.

### LIGHT WATER REACTOR

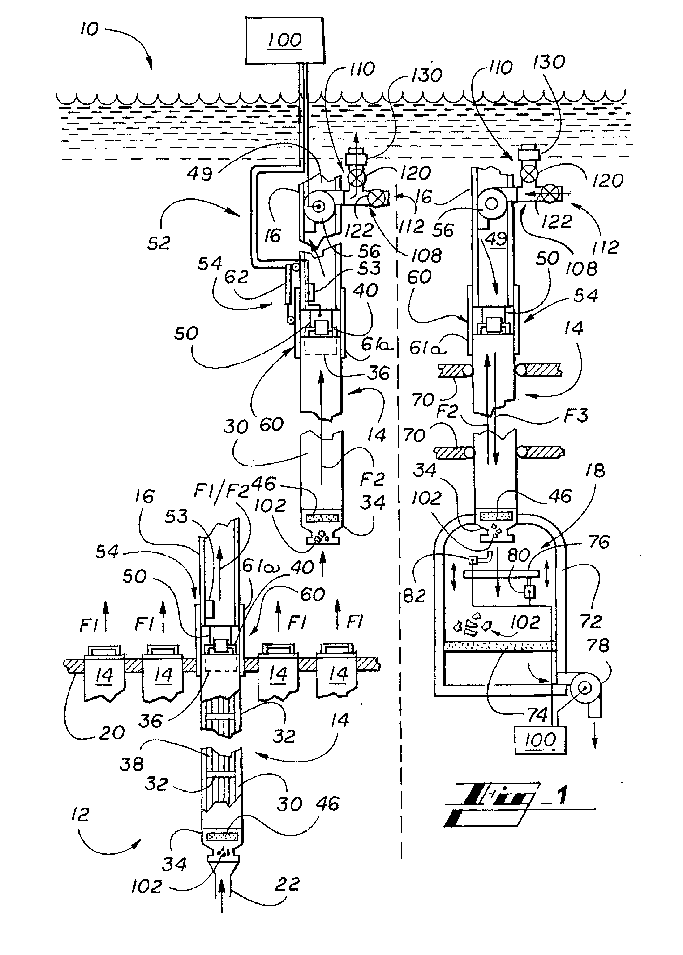

Fig. 1 illustrates relevant portions of a light water reactor 10 and fuel servicing equipment that is configured for channeled fuel assemblies. The light water reactor 10 includes a reactor core 12 of fuel assemblies 14. Fuel servicing equipment includes a mast 16 configured to remove fuel assemblies 14 from the reactor core 12 and to transport fuel assemblies 14 away from the reactor core 12 and a debris removal station 18 for a fuel assembly 14 that is removed from the reactor core 12. Under normal operation, the fuel assemblies 14 are positioned in the reactor core 12 by the top guide 20 and core plate 22. Water in the reactor core 12 is pumped in below the core plate 22 and flows in an upward flow direction F1 through the fuel assemblies 14. In the description and drawings, arrows F1, F2, F3 are used to represent both flow and flow direction.

### FUEL ASSEMBLY

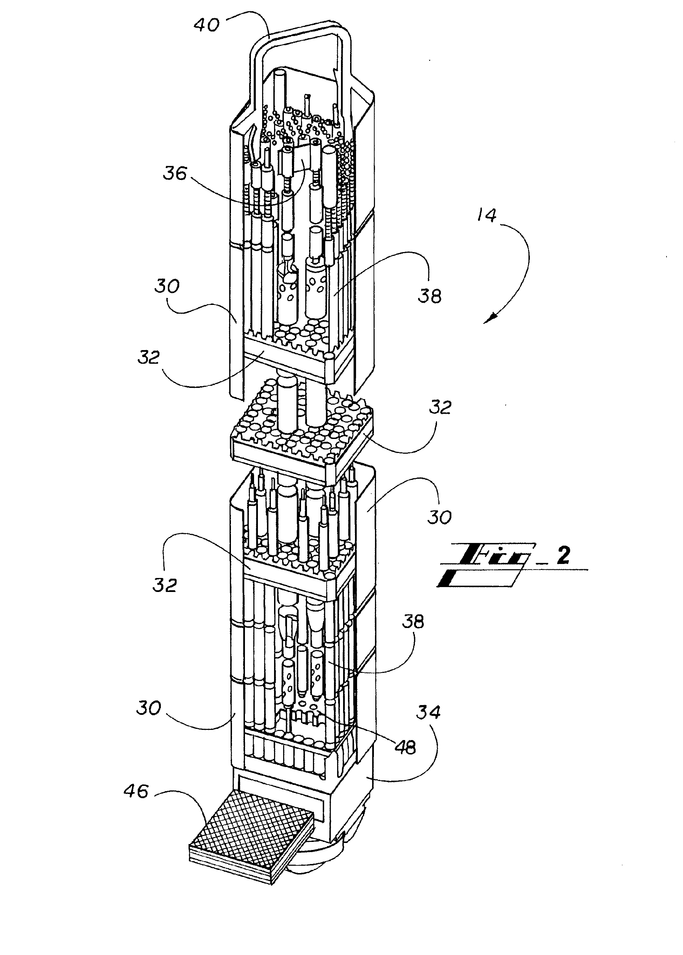

Referring to Figs. 1-6, particularly Fig. 2, each fuel assembly 14 includes a hollow metal channel 30 (shown cut away), spacer grids 32, a lower tie plate 34, and an upper tie plate 36. Fuel rods 38 are positioned in the hollow metal channel 30 by the spacer grids 32, and tie plates 34, 36. The ends of the fuel rods 38 are supported by the tie plates 34, 36 and the fuel rods 38 are supported along their length by the spacer grids 32. The fuel assembly 14 also includes a non-tabbed water rod, a tabbed water rod, upper end plugs, threaded tie rods, water rod end plugs, non threaded posts, part-length fuel rods, and other elements that are shown but not labeled for purposes of simplicity.

In a normal operation configuration, the hollow metal channel 30 is substantially vertical, the upper tie plate 36 is positioned at the top opening of the hollow metal channel 30, the lower tie plate 34 is positioned at the bottom opening of the hollow metal channel 30, and the spacer grids 32 are positioned along the interior length of the hollow metal channel 30. The spacer grids 32 and the tie plates 34, 36 are configured to allow flow through the hollow metal channel 30. During normal operation, water flows in the flow direction F1 through the lower tie plate 34, over the fuel rods 38, and out through the upper tie plate 36.

For purposes of teaching, the term "lower opening" is used herein to represent flow through a lower tie plate and the term "upper opening" is used herein to represent flow through other parts of the fuel assembly including the upper tie plate for channeled fuel and body of the fuel assembly for non-channeled fuel.

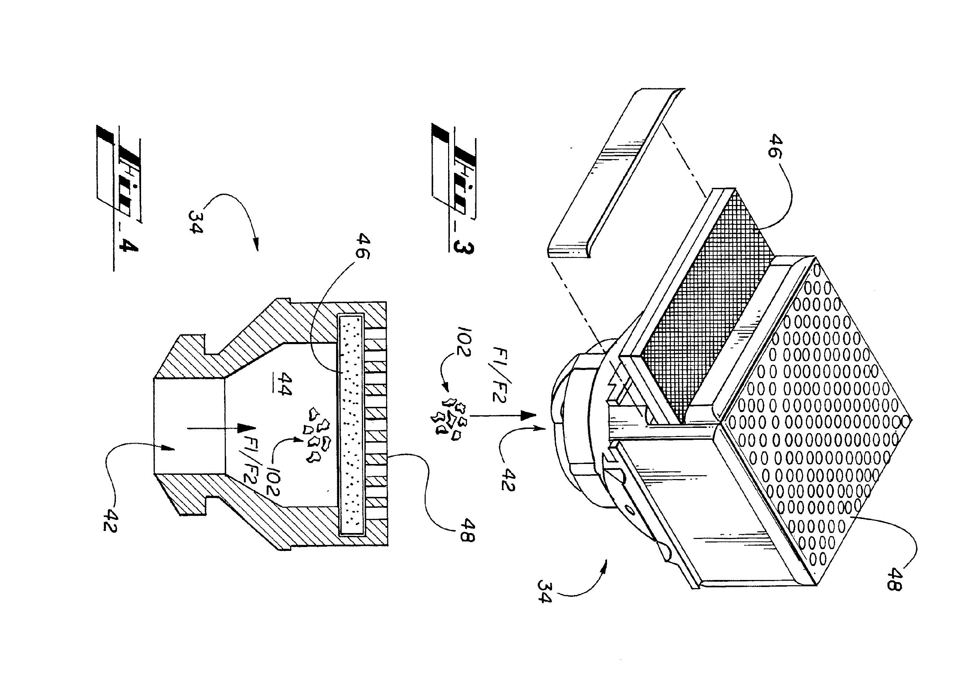

The upper tie plate 36 includes a handle 40 that is configured to be engaged by the mast 16 as described in further detail below. Referring to Figs. 1-4, particularly Fig. 4, the lower tie plate 34 includes an opening 42 to a chamber 44, a debris filter 46, and a lower tie plate grid 48. During normal operation, water flows in direction F1 through the opening 42, into the chamber 44, through the debris filter 46, and through the lower tie plate grid 48 before entering the hollow metal channel 30. The debris filter 46 separates debris 102 from the water flow F1 and traps the debris 102 within the chamber 44 and within the debris filter 46 before debris 102 can enter the hollow metal channel 30 and damage fuel rods 38.

### MAST

Referring to Figs. 1, 5, and 6, the mast 16 extends down from a platform (not shown) and is configured to remove a fuel assembly 14 from the reactor core 12 for maintenance including cleaning, repair, testing, refueling, shuffling, and the like. The mast 16 includes a void 49, a grappling device 50, a flow control system 52, and a sampling system 53. The grappling device 50 is configured to engage the handle 40 of each of the fuel assemblies 14 and includes a hook 57 that is rotated about a hinge 58 by a motor 59. The flow control system 52 is configured to isolate and control flow through one of the fuel assemblies 14 and includes a closure device 54 and a reversing pump 56.

The closure device 54 is configured surround the upper opening of the fuel assembly 14 to connect hollow portion of the channel 30 of the fuel assembly 14 and the void 49 of the mast 16. When connected, the mast 16 and the fuel assembly 14 provide a substantially continuous hollow structure or flow control channel between the void 49 and the opening 42. Water in and flowing through the fuel assembly 14 that is connected to the mast 16 by the closure device 54 is isolated from adjacent fuel assemblies 14. The closure device 54 includes an extension hood 60 driven by a piston 62 and a sealing system 63. The extension hood 60 includes an outer segment 61a that slides over an inner segment 61b in a telescoping manner. The sliding action is controlled by the extension and contraction of the piston 62. The inner segment 61b is sealed (not shown) to the main portion of the mast 16. When the handle 40 is engaged by the grappling device 50, the extension hood 60 is configured to extend over the top opening of the fuel assembly 14 and seal to the hollow metal channel 30.

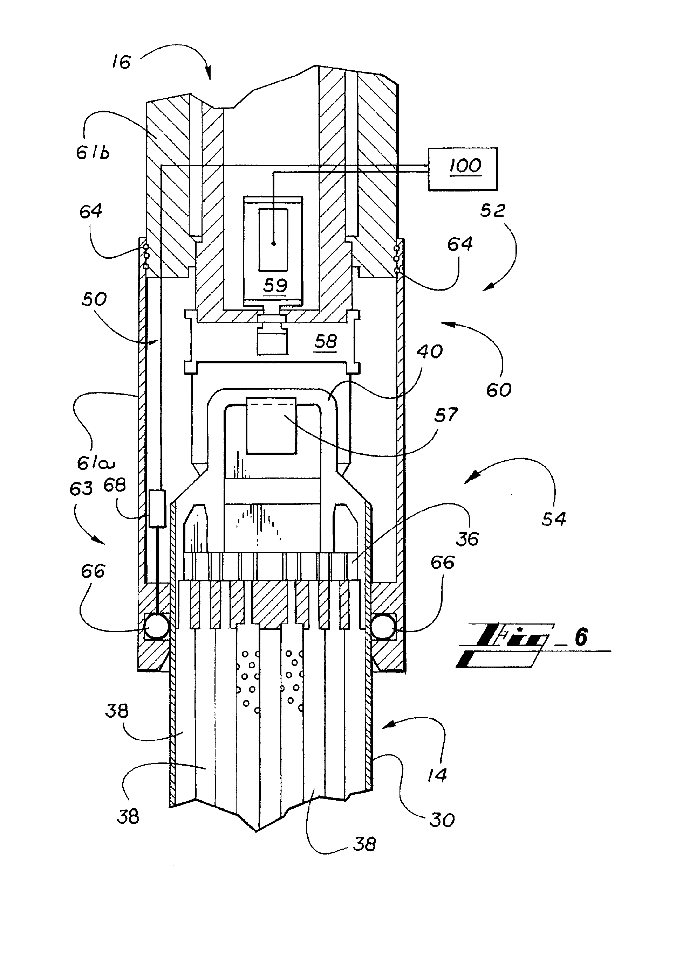

The sealing system 63 of the closure device 54 includes upper and lower seals 64, 66. Referring to Fig. 6, the upper seal 64 is configured to seal the inner segment 61b to the outer segment 61a and the lower seal 66 is configured to seal the outer segment 61a to the hollow metal channel 30. Seals 64, 66 are configured to adapt to multiple contours such that the extension hood 60 can be applied to a wide range of light water reactor fuel designs. The illustrated lower seal 66 is inflatable. The expansion and contraction of the lower seal 66 is driven by a seal pump 68. The lower seal 66 contracts to allow the extension hood 60 to easily slide over the channel 30 and expands to seal the extension hood 60 to the channel 30. Other adaptable seals passively expand and contract or mechanically expand and contract.

The reversing pump 56 is positioned in the mast 16 above the closure device 54 and is configured to move water through the mast 16 in either of flow directions F2, F3. It should be noted that flows F1, F2 are displayed as combined when the fuel assemblies 14 are in the reactor core 12 but both are identified to differentiate between flow F1 generated by the normal operation of the light water reactor 10 and flow F2 generated by the flow control system 52.

The mast 16 includes a debris sequestering system that is configured to retain any debris that originates inside the fuel assembly 14. The sequestering system 108 includes a set of pipes 110, 112 attached to the outer end of the reversing pump 56. The flow through each pipe 110, 112 is controlled with a respective control valve 120, 122. The illustrated set of pipes 110, 112 are controlled by the control valves 120, 122 such that flow out of the outer end of the reversing pump 56 is through the pipe 110 and flow into outer end of the reversing pump 56 is through the pipe 112. Pipe 110 includes a filter 130 that is configured to strain debris from flow out of the outer end of the reversing pump 56. For flow out of the reversing pump 56, valve 120 is open and valve 122 is closed. For flow into the reversing pump 56, valve 120 is closed and valve 122 is open.

The sampling system 53 is positioned in the mast 16 and configured to sample the chemical makeup of the flow F2. Generally, the sampling system 53 samples the flow F2 once the closure device 54 connects the mast 16 to the fuel assembly 14 such that the flow F2 through the fuel assembly 14 is isolated from the flow of adjacent fuel assemblies 14.

### DEBRIS REMOVAL STATION

The illustrated debris removal station 18 is offset from the reactor core 12 and includes a rack 70 for storing the fuel assembly 14 and a debris container 72 configured to receive debris that is flushed from the lower tie plate 34. The debris container 72 includes a debris filter 74 and/or a removable basket strainer (not shown), an ultrasonic vibration plate 76 for loosening debris 102 from the lower tie plate 34, a debris container pump 78 to facilitate flow through the debris container 72, and a jet 82 configured to inject gas and/or liquid with dissolved gas into the lower tie plate 34 to loosen debris 102. A similar system may also be included within mast 16, near the upper tie plate 36 of the fuel assembly 14. In this instance, debris is loosened by using the reversing pump 56 and using a jet 82 configured for injecting gas and/or liquid with dissolved gas into the fuel assembly 14 to loosen the debris 102. The debris container 72 is configured to seal to or receive the lower tie plate 34 such that debris 102 is prevented from escaping through the top opening of the debris container 72.

### CONTROL SYSTEM

Referring to Figs. 1 and 6, a control system 100 is configured to control the elements of the mast 16 and the debris removal station 18 including the motor of the grappling device 50, the extension of the piston 62 of the closure device 54, the operation and direction of the reversing pump 56, the operation of the sampling system 53, the seal pump 68 that expands and contracts the lower seal 66, the operation of the motor 80 that drives the vibration plate 76, and the debris container pump 78. The control system 100 includes a human-machine interface with controls for manually controlling the elements and computer-executable instructions for automatically controlling the elements to perform the methods described herein.

Computer components of the control system 100 include a processor, memory, and program modules including computer executable instructions for performing the methods described herein. While the methods described herein may, at times, be described in a general context of computer-executable instructions, the methods of the present disclosure can also be implemented in combination with other program modules and/or as a combination of hardware and software. The term *application,* or variants thereof, is used expansively herein to include routines, program modules, programs, components, data structures, algorithms, and the like. Applications can be implemented on various system configurations, including servers, network systems, single-processor or multiprocessor systems, minicomputers, mainframe computers, personal computers, hand-held computing devices, mobile devices, microprocessor-based, programmable consumer electronics, combinations thereof, and the like.

Computer readable media includes, for example, volatile media, non-volatile media, removable media, and non-removable media. The term *computer-readable media* and variants thereof, as used in the specification and claims, refer to storage media. In some embodiments, storage media includes volatile and/or non-volatile, removable, and/or non-removable media, such as, for example, random access memory (RAM), read-only memory (ROM), electrically erasable programmable read-only memory (EEPROM), solid state memory or other memory technology, CD ROM, DVD, BLU-RAY, or other optical disk storage, magnetic tape, magnetic disk storage or other magnetic storage devices.

### METHOD

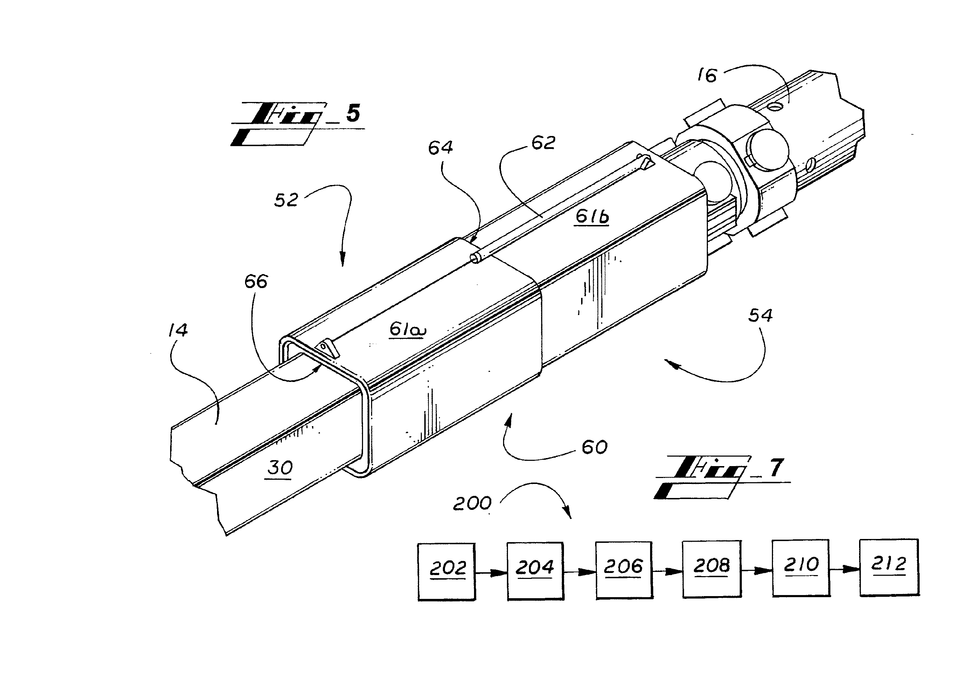

During normal operation, water flows in flow direction F1 from below the reactor core 12 up through the fuel assemblies 14. Debris 102 in the water flow F1 is trapped in the lower tie plates 34 by the debris filters 46 and held in the chamber 44 of the lower tie plate 34 by the water flow F1. Referring to Fig. 7, an exemplary method 200 of isolating one of the fuel assemblies 14, removing the fuel assembly 14 from the reactor core 12, and storing the fuel assembly 14 away from the reactor core 12 is now described. The method can include additional or alternative steps, steps can be omitted, and the steps can be performed in alternative orders.

According to an engagement step 202, the control system 100 positions the mast 16 and drives the motor 59 such that the grappling device 50 engages the handle 40 of one of the fuel assemblies 14. According to an isolation step 204, the control system 100 drives the piston 62 to extend the extension hood 60 and drives the seal pump 68 to inflate the lower seal 66 until the lower seal 66 seals the extension hood 60 to the hollow metal channel 30. Here, the outer segment 61a and the channel 30 provide a flow control channel between the void 49 and the opening 42. Once the extension hood 60 isolates the flow F1 out of the top opening of the engaged fuel assembly 14 from the other fuel assemblies 14, according to a flow control step 206, the control system 100 then drives the reversing pump 56 to generate a constant water flow F2 through the fuel assembly 14. At this point, water flows F1, F2 are both generated. According to the sampling step of 208, the isolated flow is chemically sampled as the control system 100 operates the sampling system 53.

According to a removal and transportation step 210, the control system 100 controls the mast 16 to remove the fuel assembly 14 from the reactor core 12 and move the fuel assembly 14 through the space above the reactor core 12 to the debris removal station 18. In alternative embodiments, the fuel assembly 14 can be moved to another location away from the reactor core 12 for storage. The reversing pump 56 maintains the water flow F2 through the fuel assembly 14 in an upward direction as the fuel assembly 14 travels or is positioned above the reactor core 12. As such, debris 102 that is trapped in the lower tie plate 34 and chamber 44 during normal operation remains in the lower tie plate 34 and chamber 44 during removal and transportation of the fuel assembly 14. The flow F2 vacuums the debris 102 into and against the debris filter 46 and prevents back flow so that debris 102 is not released above the reactor core 12 where it can fall into the top ends of other fuel assemblies 14 and damage fuel rods 38.

According to a debris removal step 212, the mast 16 is controlled by the control system 100 to position the fuel assembly 14 in the rack 70 above the debris container 72. Further, the control system 100 reverses the direction of the reversing pump 56 to generate a water flow F3 through the fuel assembly in a downward direction. Control system 100 alternates the flow direction F2, F3 of the reversing pump 56 to create a pulsing, two-phase effect to dislodge debris 102 from the fuel assembly 14. The water flow F3 flushes the debris 102 out of the debris filter 46 and chamber 44 of the lower tie plate 34 and into the debris container 72 where the debris 102 is collected by the debris filter 74 and/or a removable basket strainer (not shown). The debris removal step 212 further includes the control system 100 driving the variable speed motor 80 of the vibration plate 76 and the debris container pump 78 to release debris 102 from the fuel assembly 14 and to increase the flow F3 velocity. The debris removal step 212 further includes the control system 100 operating the jet 82 to loosen debris in the lower tie plate 34. Once the debris 102 is removed from the fuel assembly 14 and captured in the debris container 72, the fuel assembly 14 is returned to the reactor core 12 or the fuel assembly 14 can remain at the debris removal station 18 for storage.

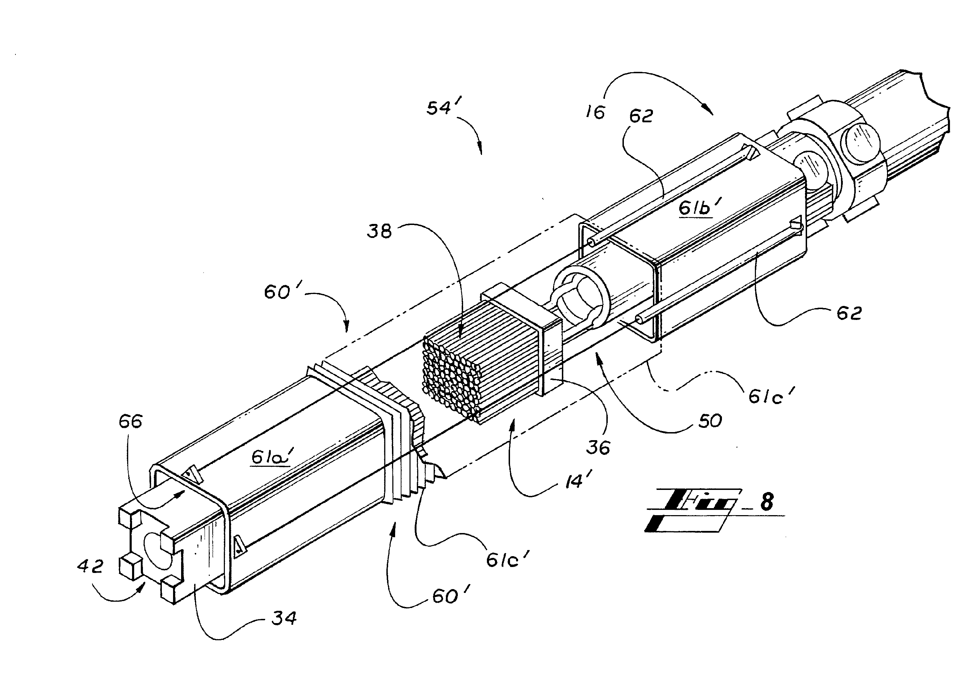

Referring to Fig. 8, fuel servicing equipment that is configured for non-channeled fuel types is described. For simplicity, the same element numerals that are used in the above description are used in the description below where the elements are substantially the same. The description below is focused on the elements that are substantially different from those described above.

In this embodiment, fuel assemblies 14' are similar to the fuel assemblies 14 described above except they do not include a hollow metal channel 30. An alternative gripper 50 is configured to engage an edge of the upper tie plate 36 of the fuel assembly 14. As such, during normal operation, cross flow between fuel assemblies 14' is permitted, although flow F1 is substantially the same.

The fuel servicing equipment includes a mast 16 with a closure device 54' that is configured to extend along the length of non-channeled fuel assembly 14' and seal to the lower tie plate 34, also referred to as a bottom nozzle. Upper tie plate 36 can also be referred to as a top nozzle. The non-channeled fuel assembly 14' can be removed from the reactor core 12 before the closure device 54' extends to surround the upper openings of the fuel assembly 14'.

The closure device 54' includes an extension hood 60' including rigid portions 61a', 61b' that are connected to one another by a flexible sleeve 61c'. The rigid portion 61a' is rigidly connected to the rigid portion 61b' and positioned by a series of pistons 62. The rigid portion 61a' includes the lower seal 66 and seals to the lower tie plate 34 such that the extension hood 60' provides a flow control channel between the opening 42 and the mast void 49. The flexible sleeve 61c' is illustrated as a bellows or accordion type structure although other telescoping and flexible structures are considered. In place of or in addition to the pistons 62, worm gears, cylinders, and pneumatic motors can be used to position the rigid portion 61a'.

The written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

For completeness, various aspects of the invention are now set out in the following numbered clauses:
1. A system for servicing a fuel assembly in a light water reactor, the fuel assembly including a lower opening in a lower tie plate and at least one upper opening through which there is access to a volume that includes fuel rods of the fuel assembly, the system comprising:
   a mast comprising a void; and
   a closure device configured to seal the mast to the fuel assembly to surround the at least one upper opening of the fuel assembly and provide a flow control channel between the mast void and the lower opening of the fuel assembly.
2. The system of clause 1, wherein the fuel assembly is a channeled fuel assembly and the closure device seals to a fuel assembly channel to provide the flow control channel.
3. The system of clause 1, wherein the fuel assembly is non-channeled fuel and the closure device seals to the lower tie plate to provide the flow control channel.
4. The system of clause 1, the mast further comprising a pump that is configured to generate flow through the lower opening.
5. The system of clause 4, wherein the pump is configured to generate flow in either of opposite directions through the lower opening.
6. The system of clause 4, wherein the pump is configured to generate flow through the lower opening such that debris in the lower tie plate of the fuel assembly is maintained within the lower tie plate during transportation of the fuel assembly.
7. The system of clause 4, wherein the pump is configured to generate flow through the lower opening to remove debris from within the lower tie plate of the fuel assembly.
8. The system of clause 7, wherein the pump is configured to change direction of the flow over time to remove debris.
9. The system of clause 1, further comprising a water chemistry sampling system that is configured to sample the water chemistry inside the flow control channel.
10. The system of clause 1, wherein the closure device is configured to isolate flow through the fuel assembly from surrounding fuel assemblies.
11. The system of clause 1, further comprising a debris removal container configured to collect debris from within the fuel assembly.
12. The system of clause 11, the debris removal container comprising at least one of a vibratory mechanism and a gaseous agitation jet that is configured to loosen debris within the lower tie plate and/or spacer grids of the fuel assembly.
13. The system of clause 11, the debris removal container comprising a debris removal pump.
14. The system of clause 4, further comprising a debris sequestering system configured to remove debris from the flow through the fuel assembly that exits through the pump.
15. The system of clause 1, the closure device comprising an inflatable seal.
16. The system of clause 1, the closure device comprising a flexible sleeve.
17. A method of removing debris from a reactor core, comprising:
   sealing a mast to a fuel assembly to surround each upper opening of the fuel assembly and provide a flow control channel between a void in the mast and a lower opening in a lower tie plate of the fuel assembly; and controlling flow through the lower opening to maintain debris in the lower tie plate.
18. The method of clause 17, further comprising removing the fuel assembly from the reactor core and transporting the fuel assembly to a debris removal station.
19. The method of clause 17, further comprising controlling flow through the lower opening to discharge debris from the lower tie plate.
20. A method of sampling the water chemistry of a fuel assembly in a reactor core, comprising:
   sealing a mast to the fuel assembly to surround each upper opening of the fuel assembly and provide a flow control channel between a void in the mast and a lower opening in a lower tie plate of the fuel assembly; and
   sampling the water chemistry inside the flow control channel.

## Claims

1. A system for servicing a fuel assembly (14) in a light water reactor (10), the fuel assembly (14) including a lower opening (42) in a lower tie plate (34) and at least one upper opening through which there is access to a volume that includes fuel rods (38) of the fuel assembly (14), the system comprising:
a mast (16) comprising a void (49); and
a closure device (54) configured to seal the mast (16) to the fuel assembly (14) to surround the at least one upper opening (42) of the fuel assembly (14) and provide a flow control channel (30) between the mast void (49) and the lower opening (42) of the fuel assembly (14).

2. The system of claim 1, wherein the fuel assembly (14) is a channeled fuel assembly (14) and the closure device (54) seals to a fuel assembly (14) channel (30) to provide the flow control channel.

3. The system of claim 1, wherein the fuel assembly (14) is non-channeled fuel and the closure device (54) seals to the lower tie plate (34) to provide the flow control channel.

4. The system of any of the preceding claims, the mast (16) further comprising a pump (56) that is configured to generate flow through the lower opening (42).

5. The system of claim 4, wherein the pump (56) is configured to generate flow in either of opposite directions through the lower opening (42).

6. The system of claim 4, wherein the pump (56) is configured to generate flow through the lower opening (42) such that debris (102) in the lower tie plate (34) of the fuel assembly (14) is maintained within the lower tie plate (34) during transportation of the fuel assembly (14).

7. The system of claim 4, wherein the pump (56) is configured to generate flow through the lower opening (42) to remove debris (102) from within the lower tie plate (34) of the fuel assembly (14).

8. The system of any of the preceding claims, further comprising a water chemistry sampling system (53) that is configured to sample the water chemistry inside the flow control channel.

9. The system of any of the preceding claims, wherein the closure device (54) is configured to isolate flow through the fuel assembly (14) from surrounding fuel assemblies (14).

10. A method of removing debris from a reactor core, comprising:
sealing a mast to a fuel assembly to surround each upper opening of the fuel assembly and provide a flow control channel between a void in the mast and a lower opening in a lower tie plate of the fuel assembly; and controlling flow through the lower opening to maintain debris in the lower tie plate.

11. The method of claim 10, further comprising removing the fuel assembly from the reactor core and transporting the fuel assembly to a debris removal station.

12. The method of claim 10, further comprising controlling flow through the lower opening to discharge debris from the lower tie plate.
